# EUROPÄISCHE PATENTANMELDUNG

(11) **EP 2 708 303 A1**
(43) Veröffentlichungstag der Anmeldung: **19.03.2014**
(21) Anmeldenummer: 13184456.5
(22) Anmeldetag: 13.09.2013
(51) Int. Cl.: B23K 9/025, A21C 13/00, B23K 9/167, B23K 10/02, B23K 26/26, B23K 31/02, F24C 15/08

(54) **Verfahren zur Herstellung einer Innenraumschale eines Gärschranks durch Stossschweissen sowie Gärschrank mit geschweisster Innenraumschale**

(30) Priorität: 13.09.2012 DE 102012216338
(71) Anmelder: MIWE Michael Wenz GmbH, 97450 Arnstein (DE)
(72) Erfinder: Klotz, Mathias, 63456 Klein-Auheim (DE); Pfister, Martin, 97535 Wasserlosen/Burghausen (DE); Reh, Pascal, 97795 Schönderling (DE)
(74) Vertreter: Patentanwälte Freischem

(57) **Zusammenfassung**

Die Erfindung betrifft ein Verfahren zur Herstellung einer Innenraumschale (10) eines Gärschranks sowie einen Gärschrank mit einer geschweissten Innenraumschale (10). Gemäß demVerfahren zur Herstellung einer Innenraumschale (10) eines Gärschranks werden mindestens zwei flächige Teilelemente (12, 14, 1) so zueinander ausgerichtet und miteinander verbunden, dass sich ein einseitig offener, durch eine Tür verschließbarer Innenraum (22) ergibt. Dabei werden die Teilelemente (12, 1, 16) auf Stoß angeordnet und anschließend mittels mindestens einer durchgehenden Schweißnaht miteinander verschweißt.

## Beschreibung

Die Erfindung betrifft ein Verfahren zur Herstellung einer Innenraumschale eines Gärschranks sowie einen Gärschrank mit einer Innenraumschale.

Viele aus der Praxis bekannte Gärschränke bestehen aus einer Innenraumschale und einem die Innenraumschale umgebenden Gehäuse, das die Innenraumschale vollständig umschließt und daher auch als Außenschale bezeichnet werden kann. Die Innenschalen bekannter Gärschränke bestehen aus mehreren Kunststoff- oder Stahlelementen, die miteinander verschraubt oder vernietet sind. Nachteilig an diesen Innenschalen sind die in den Verbindungsbereichen entstehenden Fugen, da derartige Fugen die Ansammlung von Schmutz und Bakterien begünstigen. Es ist bekannt, insbesondere auf der Innenseite von Innenraumschalen, Fugen durch Aufbringen einer zusätzlichen Kunststoffschicht zu überdecken und damit den Innenraum selbst fugenfrei zu gestalten.

Der Erfindung liegt die Aufgabe zugrunde, ein Verfahren zur Herstellung einer hygienetechnisch verbesserten Innenraumschale eines Gärschranks sowie einen entsprechenden Gärschrank mit einer solchen Innenraumschale zur Verfügung zu stellen, die einfach durchführbar bzw. herstellbar sind.

Die Lösung der Aufgabe erfolgt erfindungsgemäß mit den Merkmalen der Ansprüche 1 bzw. 5.

Gemäß dem erfindungsgemäßen Verfahren zur Herstellung einer Innenraumschale eines Gärschranks werden mindestens zwei flächige Teilelemente so zueinander ausgerichtet und miteinander verbunden, dass sich ein einseitig offener, durch eine Tür verschließbarer Innenraum ergibt. Dabei werden die Teilelemente auf Stoß angeordnet und anschließend mittels mindestens einer durchgehenden Schweißnaht miteinander verschweißt. Unter "flächig" im Sinne der Erfindung werden alle Elemente verstanden, deren Dicke deutlich kleiner ist als deren Länge und Breite. Unter flächigen Elementen sind insbesondere Bleche oder aus anderen Werkstoffen als Metall hergestellte Elemente mit ähnlichen Abmaßen bzw. Eigenschaften zu verstehen. Mit dem erfindungsgemäßen Verfahren lassen sich auf einfache Art und Weise Innenraumschalen für Gärschränke herstellen, die völlig fugenfrei sind und dadurch sehr gute hygienetechnische Eigenschaften aufweisen.

Gemäß einer praktischen Ausführungsform des erfindungsgemäßen Verfahrens werden die Teilelemente derart von außen verschweißt, dass sich auf der Innenseite der Innenraumschale im Fügebereich eine glatte, abgerundete, in den Innenraum ragende Schweißnaht ergibt. Eine solche Schweißnaht kann insbesondere durch Auswahl eines geeigneten Werkstoffs, einer geeigneten Materialdicke und Einstellen geeigneter Schweißparameter erzeugt werden. Durch die Ausbildung derartiger Schweißnähte kann sichergestellt werden, dass im Fügebereich keine scharfen Kanten und Ecken mit spitzen Winkeln entstehen, in denen sich bei späterer Benutzung des Gärschranks Schmutz und Bakterien ansammeln könnten. Das Verschweißen von außen hat den weiteren Vorteil, dass die zu fügenden Elemente nach der Verschweißung von innen und von außen fugenfrei sind. Dadurch werden selbst auf der Außenseite einer Innenraumschale Kanten und Ecken im Fügebereich vermieden.

In einer weiteren praktischen Ausführungsform werden die Teilelemente mittels Laserschweißverfahren, WIG-Schweißverfahren oder Plasma-Schweißverfahren miteinander verbunden. Als Laserschweißverfahren besonders geeignet ist das sogenannte Wärmeleitungsschweißen, bei welchem Strahlintensitäten von bis zu 100 kW/cm² angewendet werden. Diese Art des Schweißens eignet sich insbesondere zur Verbindung dünnwandiger Bleche, wie z.B. Edelstahlbleche, die für Gärschränke besonders geeignet sind.

In einer weiteren praktischen Ausführungsform des erfindungsgemäßen Verfahrens wird mindestens ein Teilelement mit einer Dicke von 0,5 bis 5 mm verwendet. Vorzugsweise weisen alle Teilelemente eine Dicke in dem vorstehend genannten Bereich auf. Besonders bevorzugt ist es, wenn für alle Teilelemente Material mit der gleichen Dicke verwendet wird. Bevorzugt sind Dicken zwischen 0,5 mm und 2,5 mm; besonders bevorzugt sind Dicken zwischen 0,5 mm und 1,5 mm.

Die Erfindung betrifft ferner einen Gärschrank mit einer aus mindestens zwei flächigen Teilelementen bestehenden, einseitig offenen Innenraumschale, deren Teilelemente auf Stoß zueinander angeordnet und über die gesamte Stoßlänge mittels einer Schweißnaht miteinander verschweißt sind. Auf die bereits im Zusammenhang mit dem erfindungsgemäßen Verfahren beschriebenen Vorteile wird hiermit noch einmal verwiesen.

Wenn die Stoßkanten der Teilelemente eines erfindungsgemäßen Gärschranks einen linearen Verlauf aufweisen, kann der Schweißvorgang mit einer Linearführung und gleichmäßigem Vorschub einfach und kostengünstig automatisiert durchgeführt werden. Vorzugsweise verlaufen alle Stöße parallel zueinander, insbesondere in horizontaler Richtung. In diesem Fall können die Schweißvorgänge über eine einzige Steuerung parallel durchgeführt werden. Darüber hinaus können in diesem Fall auch sehr gut zwei (oder mehr) Teilelemente mit identischer Geometrie verwendet werden. Beispielsweise kann ein erfindungsgemäßer Gärschrank aus einem Mittelelement, bestehend aus einem gekanteten Blech zur Bildung der Seitenwände und der Rückwand, und je einem Boden- und einem Deckelement aufgebaut sein. Das Boden- und das Deckelement können in diesem Fall baugleich sein. Durch die Verwendung baugleicher Elemente für Boden-und Deckelement können die Fertigungskosten gesenkt werden, da diese Elemente mit dem gleichen Werkzeug herstellbar sind.

In einer weiteren praktischen Ausführungsform des erfindungsgemäßen Gärschranks ragen die Schweißnähte gegenüber den an die Fügestelle angrenzenden Flächen der Teilelemente in den Innenraum und weisen eine abgerundete Form auf. Auf die damit verbundenen Vorteile wurde bereits im Zusammenhang mit den erfindungsgemäßen Verfahren hingewiesen.

Alternativ zu dieser Ausführungsform können die vorstehend beschriebenen Schweißnähte in einem weiteren Verfahrensschritt mechanisch nachbearbeitet werden, um die Fügestelle an die angrenzenden Flächen anzupassen und plan zu gestalten. Dieser Schritt verursacht jedoch zusätzliche Kosten und ist aus hygienetechnischer Sicht in der Regel nicht erforderlich, wenn die Innenseite der Innenraumschale im Bereich der Schweißnähte ein stetiges Profil mit Radien von größer als 3 mm, bevorzugt größer als 5 mm und besonders bevorzugt größer als 8 mm, aufweist.

Die Teilelemente eines erfindungsgemäßen Gärschranks sind vorzugsweise aus einem metallischen Werkstoff hergestellt, insbesondere aus Stahlblech bzw. Edelstahlblech. Dieser Werkstoff ist nicht nur sehr robust und langlebig, sondern auch hygienetechnisch gut geeignet, da er mit sehr glatten Oberflächen verfügbar ist, welche einem Anhaften von Teig, Schmutz und sonstigen Gegenständen entgegenwirken und leicht zu reinigen sind. Durch Anwendung des Tiefziehverfahrens auf mindestens ein Teilelement (vor dem Schweißen und Verbinden der Teilelemente) können die Teilelemente auf einfache und kostengünstige Art und Weise eine funktionale Form erhalten. Beispielsweise kann so im Bereich eines Bodenelements eine Vertiefung im mittleren Bereich angeordnet werden, um dort Flüssigkeiten sammeln und ableiten zu können.

In einer weiteren praktischen Ausführungsform weisen sämtliche Radien der Innenraumschale eines erfindungsgemäßen Gärschranks ein Mindestmaß von 3 mm auf. Ein bevorzugtes Mindestmaß für die Radien ist 5 mm, und ein weiter bevorzugtes Mindestmaß ist 8 mm.

Die im Zusammenhang mit dem erfindungsgemäßen Verfahren beschriebenen Merkmale können - selbst wenn dies nicht gesondert erwähnt ist-auch als Vorrichtungsmerkmale ausgebildet sein. Ebenso können im Zusammenhang mit dem erfindungsgemäßen Gärschrank beschriebene Merkmale als korrespondierendes Verfahrensmerkmal formuliert werden.

Weitere praktische Ausführungsformen und Vorteile der Erfindung werden nachfolgend im Zusammenhang mit den Zeichnungen beschrieben. Es zeigen:
- Fig. 1: eine aus drei Teilelementen aufgebaute Innenraumschale eines erfindungsgemäßen Gärschranks in einer Explosionsdarstellung und
- Fig. 2: eine exemplarische Fügestelle zwischen zwei Teilelementen einer Innenraumschale eines erfindungsgemäßen Gärschranks.

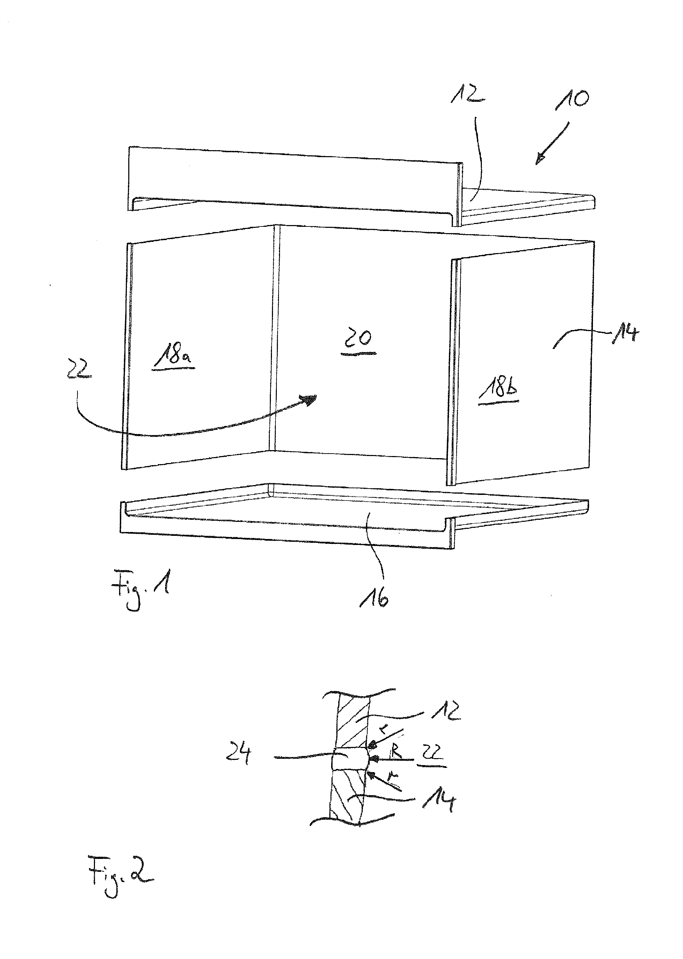

Figur 1 zeigt eine Innenraumschale 10 eines erfindungsgemäßen Gärschranks. Sie besteht im Wesentlichen aus einem tiefgezogenen Deckelement 12, einem gekanteten Mittelelement 14 und einem tiefgezogenen Bodenelement 16. Das Mittelelement 14 umfasst die Seitenwände 18a, 18b und die Rückwand 20.

In der gezeigten Ausführungsform bestehen das Deckelement 12, das Mittelelement 14 und das Bodenelement 16 aus Edelstahlblech mit einer Blechstärke (Dicke) von 1 mm hergestellt. Das Deckelement 12 ist mit dem Mittelelement 14 per Wärmeleitungsschweißen verschweißt. Das Mittelelement 14 wiederum ist mit dem Bodenelement 16 per Wärmeleitungsschweißen verschweißt.

Um die Elemente 12, 14, 16 miteinander zu verschweißen, werden diese auf Stoß zueinander ausgerichtet (indem sie in der in Figur 1 gezeigten Explosionsdarstellung aufeinander zubewegt werden). Nach Verbindung der Elemente mittels eines geeigneten Schweißverfahrens ergibt sich ein einseitig offener Innenraum 22, der zu Veranschaulichungszwecken in Figur 1 eingezeichnet wurde, obwohl in dieser Darstellung die Elemente 12, 14, 16 noch nicht miteinander verbunden sind und der Innenraum somit in dieser Figur nicht abgeschlossen ist.

Auch wenn in der in Figur 1 gezeigten Ausführungsform das Deckelement 12 und das Bodenelement 16 unterschiedliche Geometrien aufweisen, wird noch einmal darauf hingewiesen, dass diese Elemente baugleich gestaltet werden können.

Figur 2 zeigt eine Fügestelle 24 zwischen zwei Teilelementen (hier: den Teilelementen 12 und 14) einer Innenraumschale eines erfindungsgemäßen Gärschranks. Wie zu erkennen ist, ist im Bereich der Fügestelle ein in Richtung Innenraum 22 ausgebildeter Radius R ausgebildet. In der gezeigten Ausführungsform weisen die Teilelemente 12, 14, 16 im Bereich der Fügestelle 24 auf der Innenseite der Innenraumschale 10 einen stetigen Verlauf auf, d.h. im Übergangsbereich zwischen den Oberflächen der Teilelemente (in Figur 2 den Teilelementen 12 bzw. 14) und dem Radius R ist ein weiterer Radius r vorgesehen.

Statt der Radien r kann auch ein alternativer, "weicher" Übergang zwischen den an die Fügestelle 24 angrenzenden Oberflächen und dem Radius R im Bereich der Fügestelle vorgesehen sein, beispielsweise durch Ausbildung eines sehr flachen Winkels von mindestens 135°, bevorzugt mindestens 150°.

Die Mindestmaße für die Radien R und r (falls vorhanden) sind 3 mm, bevorzugt 5 mm und besonders bevorzugt 8 mm.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Innenraumschale
- 12: Deckelement
- 14: Mittelelement
- 16: Bodenelement
- 18a, 18b: Seitenwand
- 20: Rückwand
- 22: Innenraum
- 24: Fügestelle

## Patentansprüche

1. Verfahren zur Herstellung einer Innenraumschale (10) eines Gärschranks, gemäß welchem mindestens zwei flächige Teilelemente so zueinander ausgerichtet und miteinander verbunden werden, dass sich ein einseitig offener, durch eine Tür verschließbarer Innenraum (22) ergibt,
**dadurch gekennzeichnet, dass**
die Teilelemente auf Stoß angeordnet und anschließend mittels mindestens einer durchgehenden Schweißnaht miteinander verschweißt werden.

2. Verfahren nach dem vorstehenden Anspruch, **dadurch gekennzeichnet, dass** die Teilelemente derart von außen verschweißt werden, dass sich auf der Innenseite der Innenraumschale (10) im Fügebereich (24) eine glatte, abgerundete, in den Innenraum ragende Schweißnaht ergibt.

3. Verfahren nach dem vorstehenden Anspruch, **dadurch gekennzeichnet, dass** die Teilelemente mittels Laserschweißverfahren, WIG-Schweißverfahren oder Plasma-Schweißverfahren miteinander verbunden werden.

4. Verfahren nach einem oder mehreren der vorstehenden Ansprüche, **dadurch gekennzeichnet, dass** mindestens ein Teilelement mit einer Dicke von 0,5 bis 5 mm verwendet wird.

5. Gärschrank mit einer aus mindestens zwei flächigen Teilelementen bestehenden, einseitig offenen Innenraumschale (10), **dadurch gekennzeichnet, dass** die flächigen Teilelemente auf Stoß zueinander
angeordnet und über die gesamte Stoßlänge mittels einer Schweißnaht miteinander verschweißt sind.

6. Gärschrank nach dem vorstehenden Anspruch, **dadurch gekennzeichnet, dass** die Stoßkanten der Teilelemente einen linearen Verlauf aufweisen.

7. Gärschrank nach einem oder mehreren der vorstehenden Ansprüche, **dadurch gekennzeichnet, dass** zwei Teilelemente eine identische Geometrie aufweisen.

8. Gärschrank nach einem oder mehreren der vorstehenden Ansprüche, **dadurch gekennzeichnet, dass** die Schweißnähte in den Innenraum (22) ragen und eine abgerundete Form aufweisen.

9. Gärschrank nach einem oder mehreren der vorstehenden Ansprüche, **dadurch gekennzeichnet, dass** die Teilelemente aus einem metallischen Werkstoff hergestellt sind und/oder mindestens ein Teilelement im Tiefziehverfahren hergestellt ist.

10. Gärschrank nach einem oder mehreren der vorstehenden Ansprüche, **dadurch gekennzeichnet, dass** sämtliche Radien (R, r) auf der Innenseite der Innenraumschale (10) ein Mindestmaß von 3 mm aufweisen.
